# EUROPEAN PATENT APPLICATION

(11) **EP 4 513 164 A1**
(43) Date of publication of application: **26.02.2025**
(21) Application number: 23192417.6
(22) Date of filing: 21.08.2023
(51) Int. Cl.: G01N 1/42, F25D 3/10, F25D 19/00

(54) **CRYOGENIC COOLING DEVICE AND METHOD FOR CRYOGENIC PREPARATION OF A SAMPLE**

(71) Applicant: ELDICO Scientific AG, 5234 Villigen (CH)
(72) Inventor: Garbuglia, Francesco, 5234 Villigen (CH)
(74) Representative: Bohest AG

(57) **Abstract**

The present invention relates to a cryogenic cooling device (100) for cooling a sample, and a method for cryogenic preparation of the sample. The device comprises a container (2) for a cryogenic liquid bath (20) and a load lock unit (1) comprising a load lock chamber (10) connectable to the container (2) via a first passageway (13), the load lock chamber (10) comprising a gas port (11) for evacuating and purging the load lock chamber (10), and a load lock valve (14) to shut off the first passageway (13). The device further comprises a transport unit (3) removably attachable to the load lock unit (1) in a sealing manner, comprising a transport chamber (30) connected to the load lock chamber (10) via a second passageway (32) when the transfer unit (3) is attached to the load lock unit (1), a transport valve (31) to shut off the second passageway (32), and a sample manipulator (33) configured to hold and transfer a sample holder (34) from the transport chamber (30) via the second passageway (32), the load lock chamber (10) and the first passageway (13) to the container (2) and vice versa, when the transport unit (3) is attached to the load lock unit (1).

## Description

### FIELD OF THE INVENTION

The invention relates to a cryogenic cooling device and a method for cryogenic preparation of a sample, in particular a crystalline sample.

### BACKGROUND ART

Structure determination of samples is essential for the understanding of the physical and chemical properties of the sample material. Methods for structure determination of samples can be performed by using either X-rays or charged particles. Whereas X-ray diffraction analysis has been the method of choice for structure determination for many decades, charged particles, in particular electrons, have been increasingly used for structure determination. Typical examples for structure determination using charged particles are electron microscopy and electron diffraction. In such experiments, a sample is typically arranged under vacuum in detector system and a microscope image or a diffraction pattern containing structural information of the sample is formed on a detector screen. Said methods rely on a clean and pure sample in order to extract the structural information from the formed image or detection pattern.

For some varieties of samples, the structure determination benefits from cryogenic preparation which comprises cooling the sample to cryogenic temperatures for the respective structure determination by plunging the sample into a cryogenic liquid. For example, crystalline samples may be plunged into a cryogenic liquid prior to their transfer to the structure determination setup to increase the resistance of the sample against the charged particle beam, to protect hydrates or solvates in vacuum conditions, or simply to pre-cool the sample for structure determination of a cold sample. Similarly, in structure determination methods, such as cryogenic electron microscopy, cryogenic electron tomography and microcrystal electron diffraction, the biological sample is "shock-frozen" by the cryogenic liquid in an environment of vitrified water, allowing for the structure determination of the sample without the removal of water from the sample.

For the cryogenic preparation, the sample is plunged into a bath of a cryogenic liquid, such as liquid nitrogen, and subsequently transferred to the setup used for structure determination, such as an electron microscopy setup or an electron diffraction setup.

After being cooled in the cryogenic liquid, contact with ambient air should be avoided as far as possible, as otherwise the cold sample may draw water from the ambient air which may crystallize on the sample. Water crystallized on the sample may affect the performance of the structure determination. Methods for cryogenic cooling the sample used in the state of the art comprise typically a short contact with ambient air at least on the order of several seconds, typically during the transfer of the sample either from the cryogenic liquid to a suitable sample container for transfer the sample to the respective structure determination setup or directly to the structure determination setup.

It is therefore an object of the invention to provide a cryogenic cooling device and a method for cryogenic preparation of a sample, in particular a crystalline sample, which is improved over such devices known in the state of the art.

### SUMMARY

As used in the specification including the appended claims, the singular forms "a", "an", and "the" include the plural, unless the context explicitly dictates otherwise. When using the term "about" with reference to a particular numerical value or a range of values, this is to be understood in the sense that the particular numerical value referred to in connection with the "about" is included and explicitly disclosed, unless the context clearly dictates otherwise. For example, if a range of "about" numerical value A to "about" numerical value B is disclosed, this is to be understood to include and explicitly disclose a range of numerical value A to numerical value B. Also, whenever features are combined with the term "or", the term "or" is to be understood to also include "and" unless it is evident from the specification that the term "or" must be understood as being exclusive.

According to the present invention, there is provided a cryogenic cooling device for cryogenic preparation of a sample, in particular a crystalline sample. The device comprises
- a container for a cryogenic liquid bath,
- a load lock unit comprising
- a load lock chamber connectable to the container via a first passageway for transferring the sample between the load lock chamber and the container, the load lock chamber comprising a gas port for evacuating and purging the load lock chamber, and
- a load lock valve to shut off the first passageway in order to close off the load lock chamber towards the container in a sealing manner.
The device further comprises
- a transport unit removably attachable to the load lock unit in a sealing manner, comprising
   - a transport chamber connected to the load lock chamber via a second passageway when the transfer unit is attached to the load lock unit for transferring the sample between the transport chamber and the load lock chamber,
   - a transport valve to shut off the second passageway in order to close off the transport chamber in a sealing manner, and
   - a sample manipulator configured to hold and transfer the sample holder from the transport chamber via the second passageway, the load lock chamber and the first passageway to the container and vice versa, when the transport unit is attached to the load lock unit.

The cryogenic cooling device according to the invention is advantageous in that it allows for plunging a sample into a cryogenic liquid bath, removing the sample from the cryogenic liquid bath and subsequently transporting the sample to a setup for studying or processing the sample in an environment of dry nitrogen or vacuum such that the sample is always isolated from ambient air. Thus, the sample can be cryogenically prepared and transferred to another location, for instance a setup for structure determination, whilst avoiding the sample to draw water from ambient (humid) air.

The container may be any container suitable for a cryogenic liquid bath. It may comprise a simple (bucket-shaped) vessel made from foam suitable for liquid nitrogen. Alternatively, it may also comprise a vacuum-isolated dewar made from metal or glass. It may also comprise two or more containers.

The first passageway may comprise or may be at least partially formed by an opening in the load lock chamber and a corresponding opening in the container, facing the opening of the load lock chamber when the latter is connected to the container. The openings may be large enough to allow the passage of the sample holder holding the sample through the openings. The first passageway may comprise or may be at least partially formed by a channel connecting the interior of the load clock chamber with the interior of the container and/or the opening of the load lock chamber with the opening of the container. The connection between the container and the load lock chamber may, however, be not entirely isolated against the ambient air pressure, such that an overpressure of the evaporated gas from the boiling cryogenic liquid bath may be released. For instance, in case the container is embodied as a bucket-shaped open container, the load lock chamber may be loosely positioned on a rim of the bucket-shaped open container.

The first passageway can be shut off by closing the load lock valve. When the load lock valve is closed, the first passageway is shut off in order to close off the load lock chamber towards the container or the environment of the load lock chamber in a sealing manner. The load lock valve may be at least partially form or may be part of the first passageway. Shutting off the first passageway allows evacuation of the load lock chamber without that evaporated gas from the cryogenic liquid bath in the container can enter the load lock chamber.

The load lock chamber can be evacuated and/or purged with dry gas, such as nitrogen gas, via the gas port to remove humidity from the load lock chamber. In particular, the load lock chamber may be evacuated and subsequently purged with dry gas. By purging the load lock chamber with dry gas, a dry gas environment for the transfer of the sample on the sample holder from the transport chamber to the cryogenic liquid bath in the container and vice versa may be created. The gas port can comprise one single gas connection as gas inlet and gas outlet or can comprise separate gas connections for the gas inlet and outlet. The gas port may comprise a valve for opening and closing the gas connection. Such a valve may be arranged at a valve bloc connected to the gas port.

Where the connection between the container and the load lock chamber is not entirely isolated from ambient air and the load lock valve is open, maintaining a slight overpressure in the load lock chamber with respect to ambient air pressure may be advantageously used to provide a constant flow of dry gas from the load lock chamber via the connection of the load lock chamber with the container to the environment of the cryogenic cooling device. Thereby, it may be ensured that (humid) ambient air is prevented from entering into the load lock chamber and the interior of the container (and also into the interior of the transport chamber, in case the transport valve is open). In addition, the constant flow of dry gas causes humidity in the gas inside the load lock chamber (and also the interior of the transport chamber, in case the transport valve is open and the interior of the container) to be constantly removed.

The transport unit allows for a transport of the sample isolated from the ambient air when the transport valve is closed and the transport unit is detached from the load lock unit. Vice versa, the transport unit allows for a transfer of the sample holder with the sample attached thereto via the second passageway when the transport valve is open and the transport unit is attached to the load lock unit.

The removable attachability of the transport unit to the load lock unit may be such that a quick and easy detachment and attachment of the transport unit from and to the load lock unit is possible. This may for example be realized by a suitable quick release fastening mechanism.

The transport unit may be attached to the load lock unit such that the interior of the transport chamber is in connection with the interior of the load lock chamber only via the second passageway and only when the transport valve is open. The second passageway may comprise or may be at least partially formed by an opening in the transport chamber and a corresponding opening in the container, facing the opening of the load lock chamber. The openings may be large enough to allow the passage of the sample holder holding the sample through the openings. The second passageway may comprise or may be at least partially formed by a channel connecting the interior of the transport chamber with the interior of the load lock and/or the opening of the transport chamber with the opening of the load lock chamber.

When the transport valve is closed, the second passageway is shut off in order to close off the transport chamber in a sealing manner, i.e. such that it may be essentially airtight and/or vacuum-tight. For transporting the (cold) sample, the closed off transport chamber may be filled with dry gas, such as dry nitrogen gas, with a slight overpressure, i.e. with a pressure that lies slightly above the atmospheric pressure of the ambient air, such that entry of ambient (humid) air into the transport chamber is prevented.

The sample manipulator allows to transfer the sample held by the sample holder from the transport chamber into the cryogenic liquid bath in the container and back. The sample manipulator may be arranged on the transport unit, in particular on the transport chamber, such that the sample held by the sample holder can be transferred into the transport chamber without any further tools being necessary for the transfer of the sample to the transfer chamber.

The load lock chamber may comprise a viewport allowing to inspect the vertical position of the sample manipulator and/or the sample holder. For example, an optical sensor can be arranged at the viewport to provide feedback regarding the vertical position of the sample manipulator and/or the sample holder.

According to one aspect of the device according to invention, the container for a cryogenic liquid bath is a container for a liquid nitrogen bath. Advantageously, liquid nitrogen is non-toxic, comparably cheap and provides the necessary cryogenic temperatures. In addition, using liquid nitrogen also allows the usage of a comparably simple foam container as container for the cryogenic liquid bath.

The gas port may be configured to be connectable to a supply of dry gas for purging the load lock chamber and/or to a vacuum pump for evacuating the load lock chamber. In particular, the gas port may be connectable to the supply of dry gas and the load lock chamber via a valve bloc, in particular a two-way valve (shuttle valve). This may allow to easily switch between purging operation and evacuation operation. The valve bloc, in particular the two-way valve (shuttle valve) may be part of the cryogenic cooling device. The vacuum pump may for instance be a scroll pump.

The cryogenic cooling device may further comprise a controller to control operation of at least one of the vacuum pump, the supply of dry gas, and the valve bloc, in particular the two-way valve (shuttle valve).Thus, the controller allows for a controlled flow of dry gas into the chamber for a controlled purging process as well as a controlled evacuation of the load lock chamber, and in case the transport unit is attached to the load lock unit and the transport valve is open, also the transport chamber. The controller may be configured to perform automated cycles of purging and evacuating as well as to maintain a predetermined pressure in the load lock chamber.

The sample manipulator may comprise a movable rod having a distal tip configured to hold the sample holder. Such a rod is advantageous in that it is easy to implement and space-saving. It allows for a comparably long travel distance without requiring significantly more space in a direction perpendicular to the travel direction of the rod than the dimensions of the sample holder. The movable rod may be made of aluminum, such that the rod is lightweight. The rod may be movably mounted via a rod mount, in particular a mechanical feedthrough, more particularly a linear or rotary-linear feedthrough, to the transport chamber.

The load lock chamber may be mounted to a mounting plate carrying the load lock unit. Preferably, the mounting plate is swivel-mounted such that the mounting plate, the load lock unit and the transport unit, if attached to the load lock unit, are swivelable aside to provide access to an opening of the container, such as an opening used for filling the container with cryogenic liquid or the opening mentioned above forming part of the first passageway, which may also be used for filling the container with cryogenic liquid. Thus, the container can be easily filled with the cryogenic liquid. No cumbersome filling mechanism for filling the cryogenic liquid into the container is necessary. In addition, having the load lock unit and the transport unit, if attached thereto, mounted on mounting plate allows for an easy exchange of the container, for instance, with another container that is filled with another cryogenic liquid. Moreover, it is possible to easily transport the load lock unit and the transport unit, if attached thereto.

Preferably, the load lock valve and the transport valve are gate valves. Gate valves are advantageous for shutting passageways having a large cross section, such as the first and second passageway, which at hand must be large enough for the sample manipulator and the sample holder mounted thereon to pass through. Moreover, gate valves can typically be closed and opened fast. Each of the gate valves may be one of a manual, a pneumatic or an electric gate valve.

Preferably, the transport valve is a manual gate valve. Using a manual gate valve as the transport valve is advantageous in that it requires no external power source. Also, no control elements such as pneumatic hoses or electric cables need to be transported, or alternatively, disconnected, when the transport unit is detached from the load lock unit to transport the sample in the transport chamber. This allows an easy detachment and transport of the transport chamber.

The load lock valve may be a pneumatic gate valve. Using a pneumatic gate valve as the load lock valve is advantageous in that it allows for a fast opening and closure.

According to the invention, there is further provided a method for cryogenic preparation of a sample, in particular a crystalline sample, using a cryogenic cooling device according to the present invention and as described herein. The method comprises the steps of
- providing a cryogenic liquid bath in the container,
- mounting the sample holder holding a sample to the manipulator,
- attaching the transport unit to the load lock unit,
- closing the load lock valve,
- evacuating the load lock chamber, and in case the transport valve is open, the transport chamber, via the gas port,
- purging the load lock chamber, and in case the transport valve is open, the transport chamber, with dry gas via the gas port,
- opening the load lock valve,
- providing dry gas via the gas port to maintain an overpressure at least in the load lock chamber,
- opening the transport valve in case the transport valve is closed,
- transferring the sample holder using the sample manipulator from the transport chamber via the second passageway, the load lock chamber and the first passageway into the cryogenic liquid bath in the container,
- transferring the sample holder using the sample manipulator from the cryogenic liquid bath in the container via the first passageway, the load lock chamber and the second passageway into the transport chamber,
- closing the transport valve, and
- detaching the transport unit.

The method according to the present invention offers the same advantages as the cryogenic cooling device according to the present invention, and thus equally apply. To avoid unnecessary repetition, reference is made to the description of the cryogenic cooling device and its advantageous aspects and effects.

The step of closing the load lock valve may comprise shutting off the first passageway in order to close off the load lock chamber towards the container in a sealing manner, such that an opening of the first passageway is closed. The step of opening the load lock valve may comprise opening the first passageway to open the load lock chamber towards the container to open the load lock chamber towards the container, such that an opening of the first passageway is clear.

The step of closing the transport valve may comprise shutting off the first passageway in order to close off the transport chamber towards the container in a sealing manner, such that an opening of the second passageway is closed. The step of opening the transport valve may comprise opening the second passageway open the transport chamber towards the load lock chamber, such that an opening of the second passageway is clear.

Between the steps of transferring the sample holder passageway from the transport chamber into the container and transferring the sample holder from the container into the transport chamber, the sample holder holding the sample may be kept in the cryogenic liquid for a predetermined cooling time, which may be in a range of 30 to 60 seconds.

The overpressure is in a range between 1.1 bar and 1.5 bar, in particular between 1.2 bar and 1.4 bar. As used herein, the overpressure is to be understood as an absolute pressure, but not as a pressure difference between an absolute pressure and atmospheric pressure. The provided pressure range advantageously ensures that ambient (humid) air is prevented from entering into the load lock chamber without exerting any unnecessary pressure onto the respective chamber walls, the connector of the transport unit and the load lock unit or onto the sample itself.

The steps of evacuating and purging the load lock chamber, and in case the transport valve is open, the transport chamber, may be repeated alternatingly. Advantageously, repetition of these steps may facilitate to further reduce the level of humidity in the load lock chamber, and if attached, the transport chamber. The steps of evacuating and purging can be repeated one or more times. A controller for a valve bloc may be configured to perform cycles of evacuating and purging in an automated manner.

The step of evacuating the load lock chamber, and in case the transport valve is open, the transport chamber, may comprise generating a pressure therein in the range of 0 millibars to 5 millibars, in particular in the range of 0.1 millibars to 1 millibar. Said pressure range for the vacuum is sufficient to reduce the humidity level to a desired level by evacuating and purging and may be easily be achieved for instance by a scroll pump.

The step of providing a cryogenic liquid bath in the container comprises providing a liquid nitrogen bath in the container. As mentioned before, liquid nitrogen is non-toxic, comparably cheap and provides the necessary cryogenic temperatures.

The method may further comprise the steps of closing the load lock valve and evacuating the load lock chamber as well as, with the transport valve open, the transport chamber. Said steps are performed after the step of transferring the sample holder from the cryogenic liquid bath in the container into the transport chamber, and prior to the step of closing the transport chamber gate valve and detaching the transport unit. This step allows to transport the sample arranged in the transport chamber under vacuum, instead of an atmosphere of dry gas.

### BRIEF DESCRIPTION OF THE DRAWINGS

Further advantageous aspects of the invention become apparent from the following description of an exemplary embodiment of the invention with the aid of the (schematic) drawings, in which:
Fig. 1 (not to scale) schematically shows cross-sectional front view of an embodiment of the cryogenic cooling device according to the invention.
Fig. 2 (not to scale) schematically shows a side view of the cryogenic cooling device according to Fig. 1.
Fig. 3 (not to scale) schematically shows a back view of the cryogenic cooling device according to Fig. 1.

### DETAILED DESCRIPTION OF EMBODIMENTS

The subject matter is now described with reference to the drawings, wherein like reference numerals are used to refer to like elements throughout.

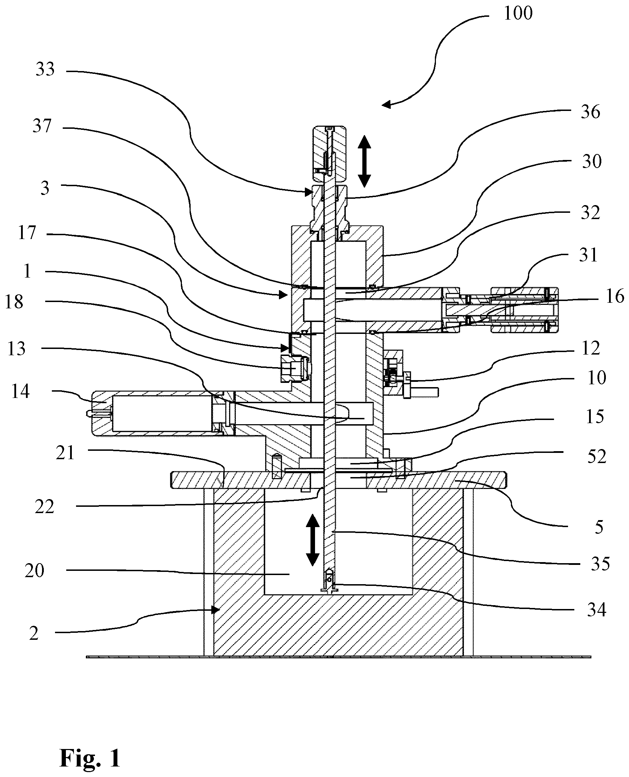

Fig. 1 (not to scale) schematically shows a cross-sectional front view of the principal setup of the cryogenic cooling device 100 according to an exemplary embodiment of the present invention. In the present embodiment, the cryogenic cooling device 100 comprises a load lock unit 1, a container 2 for a cryogenic liquid bath 20 and a transport unit 3 removably attached to the load lock unit 1, wherein the load lock unit 1 is arranged on top of the container 2 and the transport unit 3 is arranged on top of the load lock unit 1.

The container 2, which is embodied as is a bucket-shaped foam container, is filled with liquid nitrogen as cryogenic liquid forming the cryogenic liquid bath 20. The container 2 comprises an upper circumferential surface 21 surrounding an upper opening 22 of the container 2.

The load lock unit 1 is mounted on a mounting plate 5 which is arranged on the upper circumferential surface 21 of the container 2. The load lock unit 1 comprises load lock chamber 10 which is fixedly mounted to the mounting plate 5. The mounting plate 5 comprises an opening 52, such that the upper opening 22 of the container 2 is not entirely obstructed. The load lock chamber 10 comprises a lower opening 15 at the bottom of the load lock chamber 10, which is arranged above the upper opening 22 of the container 2 when the load lock chamber 10 is in position above the container 2. Thus, a first passageway 13 is formed between the interior of the load lock chamber 10 and the interior of the container 2. The load lock unit 1 further comprises a load lock valve 14, which is a pneumatic gate valve with a pneumatically actuated gate. When the load lock valve 14 is closed, the first passageway 13 is shut off and the interior of the load lock chamber 10 is closed off towards the interior of the container 2. When the load lock valve 14 is open, the first passageway 13 towards the container 2 is clear.

As already mentioned before, the cryogenic cooling device 100 further comprises a transport unit 3 which is removably attached to the load lock unit 1. The transport unit 3 comprises a transport chamber 30 and a transport valve 31. The transport chamber 30 comprises an opening 37 to which the transport valve 31 is attached in an airtight and vacuum-tight manner in order to open and close the opening 37. The transport valve 31 is further used to removably attach the transport unit 3 to the load lock unit 1, more particularly to an upper opening 17 of the load lock chamber 10.

When the transport unit 3 is attached to the load lock unit 1, the transport chamber 30 is arranged together with the transport valve 31 on top of the load lock chamber 10 such that the opening 37 of the transport chamber 30 faces the upper opening 17 of the load lock chamber 10. Hence, when the transport valve 31 is open, a second passageway 32 is formed between the interior of the transport chamber 30 and the interior of the load lock chamber 10. Vice versa, when the transport valve 31 is closed, the second passageway 32 is shut off to close off the transport chamber 30 in a sealing manner. In the present embodiment, the transport valve 31 is a manual gate valve, which advantageously does not require any external power source and thus allows to easily remove the transport unit 3 in a closed configuration from the load lock unit 1.
In order to facilitate the attachment and detachment of the transport unit 3, the transport valve 31 is removably attached to the load lock chamber 10 via a quick release fastening mechanism 12. In a closed position of the quick release fastening mechanism 12, the transport unit 3 is pulled by the quick release fastening mechanism 12 towards the load lock chamber 10 and a connection between the transport valve 31 and the load lock chamber 10 is closed in a sealing manner by a sealing ring 16.

The transport unit 3 further comprises a sample manipulator 33 which is mounted via a manipulator mount 36 to the transport chamber 30. The sample manipulator 33 further comprises a rod 35 with a sample holder 34 arranged at a distal tip of the rod 35. The manipulator mount 36 allows a movement of the rod in a vertical direction, such that the rod 35 is movable in a vertical direction (see black double-sided arrows) with respect to the manipulator mount 36 and thus the transport chamber 30. The manipulator mount 36 is mounted to the transport chamber 30 in a sealing manner and the rod 35 is movably mounted to the manipulator mount 36 in sealing manner, such that the interior of the transport chamber 30 is sealed against ambient air at the manipulator mount 36. The manipulator mount 36 comprises a mechanical feedthrough suitable for vacuum applications. It may have a locking device to hold the rod 35 in a fixed vertical position.

When the transport valve 31 and the load lock valve 14 are both open the first passageway 13 and the second passageway 32 are clear and the sample holder 34 can be transferred by the rod 35 from the interior of the transport chamber 30 into the cryogenic liquid bath 20 in the container 2.

The load lock chamber 10 further comprises a viewport 18 with a glass window. An optical sensor (not shown in the figures) can be arranged at the viewport 18 to provide feedback regarding the vertical position of the rod 35. The signal of the optical sensor can be provided to a controller of the load lock valve 14 to prevent that the load lock valve 14 is closed when a portion of the rod 35 or the sample holder 34 is arranged in the first passageway 13.

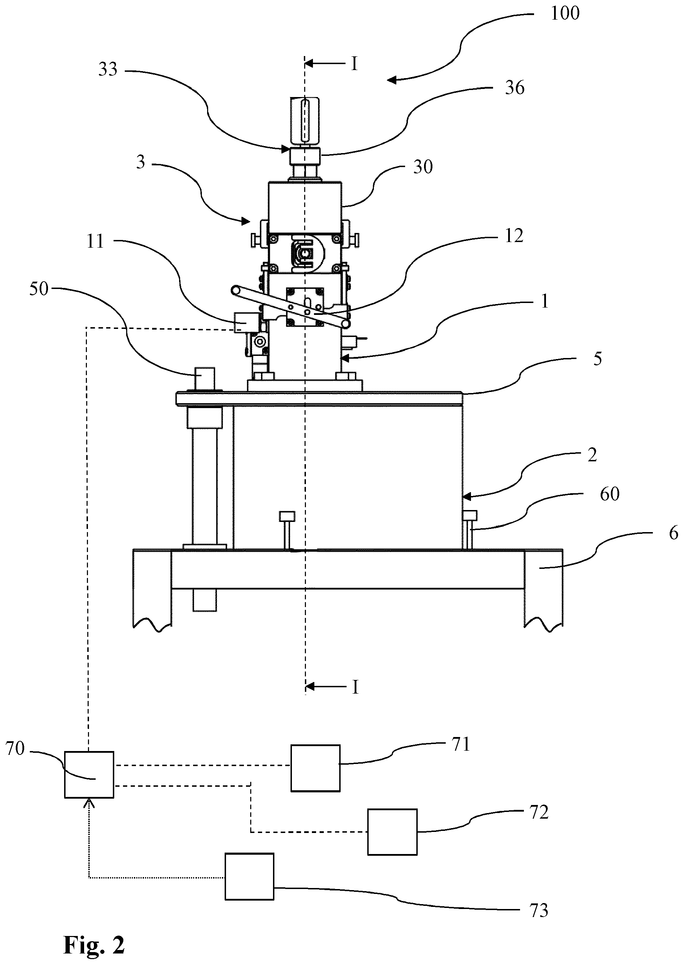

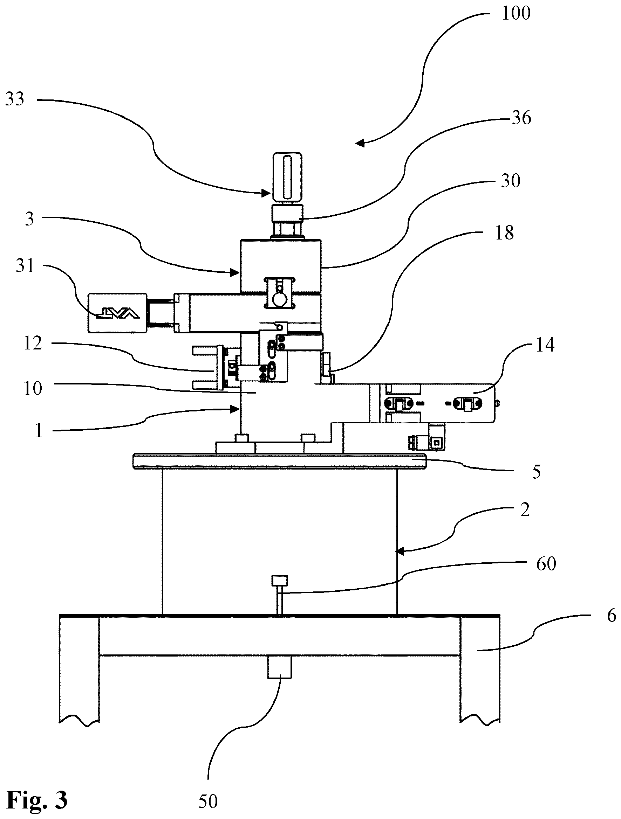

Fig. 2 and Fig. 3 are described in the following together. Fig. 2 (not to scale) schematically shows a side view of the embodiment of the cryogenic cooling device 100 shown in Fig. 1 as well as a scheme of related gas connections. The line I-I indicates the cross-sectional plane of Fig. 1. Fig. 3 (not to scale) schematically shows a back view of the of the embodiment of the cryogenic cooling device 100 shown in Fig. 1 and Fig. 2.

The container 2 is arranged on a mounting table 6 with a mounting pin 50 mounted thereto. The mounting plate 5 is swivel-mounted to the mounting pin 50, such that the mounting plate 5, the load lock unit 1 and the transport unit 3, if attached to the load lock unit 1, are swivelable aside to uncover the upper opening 22 of the container 2. The container 2 is kept in place by a plurality of table pins 60 when the mounting plate 5 is swiveled aside.

The load lock unit 1 comprises a gas port 11 as gas inlet and gas outlet. The gas port 11 is connected (see dashed lines) to a valve bloc 70. The valve bloc 70 is in turn connected to a scroll pump 71 that allows evacuation of the load lock chamber 10 via the gas port 11 and also of the transport chamber 30, if it is attached to the load lock unit 1 and if the transport valve 31 is open. The valve bloc 70 is further connected (see dashed line) to a nitrogen gas supply 72 used as dry gas supply that allows providing dry nitrogen gas to the load lock chamber 10 in order to purge the load lock chamber 10 and, if attached and transport valve 31 is open, the transport chamber 30 via the gas port 11. The valve bloc 70 is connected to a controller 73. The controller 73 allows for the control of one or more valves of connections of the valve bloc to the gas port, the scroll pump 71 and the nitrogen gas supply 72, such that the gas flow into the load lock chamber 10 and the suction of gas out of the load lock chamber 10 via the gas port 11 can be controlled. Moreover, the controller may be configured to control the valve bloc 70 to provide dry nitrogen gas to the load lock chamber 10 to maintain an overpressure in the in a range between 1.1 bar and 1.5 bar, in particular between 1.2 bar and 1.4 bar. The dry nitrogen gas is provided via gas port 11 and gas may leak out via the connection between the load lock chamber 10 and the container 2, in particular along the upper circumferential surface 21 where the mounting plate 5 is arranged on. In case the transport unit 3 is attached to the load lock chamber 10 and the transport valve 31 is open and the load lock valve 14 is open as well, said overpressure can be maintained to maintain a gas flow inside the load lock unit 1, the container 2 and the transport unit 3. Thereby, humidity can be constantly removed from the interior of the load lock chamber 10, the transport chamber 30 and the container 2.

For cryogenically preparing a sample using the cryogenic cooling device 100, liquid nitrogen is filled into the container 2 to provide a cryogenic liquid bath 20 in the container 2. This step may be performed when the mounting plate 5 is swiveled aside to uncover the upper opening 22 of the container 2. Subsequently, the mounting plate 5, the load lock unit 1 and the transport unit 3, if attached to the load lock unit 1 are be swiveled back to an arrangement on top of the container 2, such that the mounting plate 5 sits on the upper circumferential surface 21 of the container 2. The sample holder 34 holding the sample to be prepared is mounted to the distal end of the rod 35 of the sample manipulator 33. Then, the transport unit 3 is attached to the load lock unit 1. By closing the quick release fastening mechanism 12, the connection between the transport valve 31 and the load lock chamber 10 is sealed by the sealing ring 16. Subsequently, the load lock valve 14 is closed to shut off the first passageway 13. The transport chamber 30 is evacuated via gas port 11 by the scroll pump 71. In case the transport chamber 30 needs to be evacuated as well, this step needs to be performed with the transport valve 31 open. For purging the load lock chamber 10, and also - in case the transport valve 31 is open -the transport chamber 30, the connection to the nitrogen gas supply 72 and the load lock chamber 10, and in case the transport valve 31 is open, the transport chamber 30, is purged with nitrogen gas. These steps of evacuating and purging may be repeated one or more times. Subsequently, when at least the load lock chamber 10 is filled with nitrogen gas, the load lock valve 14 is opened. Dry gas may be provided from the nitrogen gas supply 72 via the gas port 11 to the load lock chamber 10 to maintain an overpressure in the in a range between 1.1 bar and 1.5 bar, in particular between 1.2 bar and 1.4 bar. In case the transport unit 3 is attached to the load lock unit 1, the transport valve 31 is open and the load lock valve 14 is open as well, said overpressure can be maintained to maintain a gas flow inside the load lock unit 1, container 2 and transport unit 3. In case the transport valve 31 is closed, it needs to be opened, such that both, the load lock valve 14 and the transport valve 31 are open and the first passageway 13 and the second passageway 32 are clear for transferring the sample holder 34 into the cryogenic liquid bath 20 in the container 2. The sample holder 34 with the sample mounted thereon can now be transferred using the sample manipulator 33 from the transport chamber 30 via the clear second passageway 32, the load lock chamber 10 and the clear first passageway 13 into the cryogenic liquid bath 20. After a predetermined cooling time, for example, in the range of 30 to 60... seconds, the sample holder 34 holding the sample can be removed again from the cryogenic liquid bath 20 using the sample manipulator 33. The sample holder 34 can be transferred from the container 2 via the clear first passageway 13, the load lock chamber 10 and the clear second passageway 32 into the transport chamber 30. Subsequently, the transport valve 31 can be closed to shut off the second passageway 32, thereby closing off the transport chamber 30 in a sealing manner. The quick release fastening mechanism 12 can be opened and the transport unit 3 can be detached from the load lock unit 1. The sample holder 34 holding the sample can then be transported in the closed transport unit 3 in an atmosphere of dry nitrogen gas to a different place, for example, to a structure determination setup.

If - instead of an atmosphere of dry nitrogen gas - it is desired to transport the sample holder 34 with the sample under vacuum, the load lock valve 14 can be closed to shut off the first passageway 13, and the transport chamber 30 as well as the load lock unit 1 can be evacuated prior to closing the transport valve 31. The sample holder 34 with the sample can then be transported in the closed transport unit 3 under vacuum to a different place, for example, to a structure determination setup.

## Claims

1. Cryogenic cooling device (100) for cryogenic preparation a sample, in particular a crystalline sample, the device comprising
- a container (2) for a cryogenic liquid bath (20),
- a load lock unit (1) comprising
- a load lock chamber (10) connectable to the container (2) via a first passageway (13) for transferring the sample between the load lock chamber (10) and the container (2), the load lock chamber (10) comprising a gas port (11) for evacuating and purging the load lock chamber (10), and
- a load lock valve (14) to shut off the first passageway (13) in order to close off the load lock chamber (10) towards the container (2) in a sealing manner,
- a transport unit (3) removably attachable to the load lock unit (1) in a sealing manner, comprising
- a transport chamber (30) connected to the load lock chamber (10) via a second passageway (32) when the transfer unit (3) is attached to the load lock unit (1) for transferring the sample between the transport chamber (30) and the load lock chamber (10),
- a transport valve (31) to shut off the second passageway (32) in order to close off the transport chamber (30) in a sealing manner, and
- a sample manipulator (33) configured to hold and transfer a sample holder (34) for holding the sample from the transport chamber (30) via the second passageway (32), the load lock chamber (10) and the first passageway (13) to the container (2) and vice versa, when the transport unit (3) is attached to the load lock unit (1).

2. Cryogenic cooling device (100) according to claim 1, wherein the container (2) for a cryogenic liquid bath (20) is a container (2) for a liquid nitrogen bath.

3. Cryogenic cooling device (100) according to any one of the preceding claims, wherein the gas port (11) is connectable to a supply of dry gas (72) for purging the load lock chamber (10) and/or to a vacuum pump (71) for evacuating the load lock chamber (10).

4. Cryogenic cooling device (100) according to claim 3, further comprising a controller (73) to control the vacuum pump (71) and the supply of dry gas (72).

5. Cryogenic cooling device (100) according to any one of the preceding claims, wherein the sample manipulator (33) comprises a movable rod (35) having a distal tip configured to hold the sample holder (34).

6. Cryogenic cooling device (100) according to any one of the preceding claims, wherein the load lock chamber (10) is mounted to a mounting plate (5) for mounting the load lock unit (1), wherein the mounting plate (5) is swivel-mounted such that the mounting plate (5), the load lock unit (1) and the transport unit (3), if attached to the load lock unit (1), are swivelable aside to provide access to an opening (22) of the container (2).

7. Cryogenic cooling device (100) according to any one of the preceding claims, wherein the load lock valve (14) and the transport valve (31) are gate valves.

8. Cryogenic cooling device (100) according to claim 7, wherein the transport valve (31) is a manual gate valve.

9. Cryogenic cooling device (100) according to claim 7 or claim 8, wherein the load lock valve (14) is a pneumatic gate valve.

10. Method for cryogenic preparation of a sample, in particular a crystalline sample, using the cryogenic cooling device (100) according to any one of claims 1 to 9, the method comprising the steps of
- providing a cryogenic liquid bath (20) in the container (2),
- mounting the sample holder (34) holding a sample to the manipulator (33),
- attaching the transport unit (3) to the load lock unit (1),
- closing the load lock valve (14),
- evacuating the load lock chamber (10), and in case the transport valve (14) is open, the transport chamber (30), via the gas port (11),
- purging the load lock chamber (10), and in case the transport valve (14) is open, the transport chamber (30), with dry gas via the gas port (11),
- opening the load lock valve (14),
- providing dry gas via the gas port (11) to maintain an overpressure at least in the load lock chamber (10),
- opening the transport valve (31) in case the transport valve (31) is closed,
- transferring the sample holder (34) using the sample manipulator (33) from the transport chamber (30) via the second passageway (32), the load lock chamber (10) and the first passageway (13) into the cryogenic liquid bath (20) in the container (2),
- transferring the sample holder (34) using the sample manipulator (33) from the cryogenic liquid bath (20) in the container (2) via the first passageway (13), the load lock chamber (10) and the second passageway (32) into the transport chamber (30),
- closing the transport valve (31), and
- detaching the transport unit (3).

11. Method according to claim 10, wherein the overpressure is in a range between 1.1 bar and 1.5 bar, in particular between 1.2 bar and 1.4 bar.

12. Method according to claim 10 or claim 11, wherein the steps of evacuating and purging the load lock chamber (10), and in case the transport valve (31) is open, the transport chamber (30), are repeated.

13. Method according to any one of claims 10 to 12, wherein the step of evacuating the load lock chamber (10), and in case the transport valve (31) is open, the transport chamber (30), comprises generating a pressure therein in the range of 0 millibars to 5 millibars, in particular in the range of 0.1 millibars to 1 millibar.

14. Method according to any one of the preceding claims, wherein the step of providing a cryogenic liquid bath (20) in the container (2) comprises providing a liquid nitrogen bath in the container (2).

15. Method according to any one of the preceding claims, further comprising the steps of closing the load lock valve (14) and evacuating the load lock chamber (10) as well as, with the transport valve (31) open, the transport chamber (10), wherein said steps are performed after the step of transferring the sample holder (34) from the cryogenic liquid bath (20) in the container (2) into the transport chamber (10), and prior to the step of closing the transport valve (31) and detaching the transport unit (3).
